# EUROPEAN PATENT SPECIFICATION

(11) **EP 2 186 300 B1**
(45) Date of publication and mention of the grant of the patent: **28.01.2015**
(21) Application number: 08807340.8
(22) Date of filing: 15.08.2008
(51) Int. Cl.: H04L 29/06, H04L 29/08

(54) **METHOD AND COMMUNICATION NODE FOR OPTIMISING TIME SENSITIVE COMMUNICATIONS**
VERFAHREN UND KOMMUNIKATIONSKNOTEN ZUR OPTIMIERUNG VON ZEITSENSIBLER KOMMUNIKATION
PROCÉDÉ ET NOEUD DE COMMUNICATION POUR OPTIMISER DES COMMUNICATIONS TEMPORAIRES

(30) Priority: 20.08.2007 US 841586
(43) Date of publication of application: 19.05.2010
(73) Proprietor: Telefonaktiebolaget L M Ericsson (publ), 164 83 Stockholm (SE)
(72) Inventor: FOTI, George, Dollard Des Ormeaux, Québec H9G 2Z8 (CA)
(74) Representative: Hoffmann Eitle
(86) International application number: PCT/IB2008/053293
(87) International publication number: WO 2009/024910

(56) References cited:
- EP-A- 1 613 009
- WO-A-2006/114135
- US-A1- 2004 224 694

## Description

### Technical Field

The present invention relates to a method and system for optimising time sensitive communications.

### Background

The Session Initiation Protocol (SIP) is an Internet Engineering Task Force (IETF) Internet protocol that supports the initiation of communication sessions that may involve multimedia elements such as voice, video, chat, gaming, etc. Like other protocols such as HTTP (Hyper Text Terminal Protocol) or SMTP (Simple Mail Transfer Protocol), SIP works in the application layer of the open system interconnection (OSI) communications model, which is responsible for insuring communication is possible. SIP can establish multimedia session or Internet telephony calls and can modify, or terminate them. The protocol can also allow participants to invite each other to unicast or multicast sessions, or establish such sessions without necessarily involving the initiator. Because SIP supports name mapping and redirection services, it makes possible for users to initiate and receive communications and services from end location, and for networks to identify the users wherever they are. Participants to SIP sessions are identified by SIP URLs (Uniform Resource Locators). Requests can be sent through any transport protocols such as, for example UDP (User Datagram Protocol), or TCP (Transfer Control Protocol). SIP determines the end system to be used for the session, the communication media and its parameters, and the called party's desire to engage in a communication and, when these are assured, establishes call parameters at either end of the communication, and handles call transfer and termination. SIP protocol is specified in the IETF's request for comments RCF 3261.

The IP Multimedia Subsystem (IMS) is an architecture framework for delivery of Internet protocol IP multimedia to mobile users. It was originally designed by the wireless standards body third Generation Partnership Project (3GGP), and is part of the vision for evolving mobile networks beyond GSM (General System for mobile Communications). In its original formulation, 3GPP R5 (Release 5) presented an approach to deliver Internet services over GPRS (General Packet Radio Service). This vision was later updated by 3GPP, 3GPP2, and TISPAN (Telecoms & Internet converged Services & Protocols for Advanced Networks, which is a standard body of the ETSI (European Telecommunications Standards Institute) by requiring support of networks other than GPRS, such as for example WLAN (Wireless Local Area Networks), CDMA2000 (Code Division Multiple Access 2000), and fixed line.

In order to render easier the integration with the Internet, IMS uses as much as possible IETF protocols, such as SIP. IMS is also being implemented in traditional cellular network that now run under IP, and makes use of SIP in order to provide additional enhanced IP based services, such as for example Push-To-Talk (PTT), in addition to traditional circuit switched voice services.

However, SIP is a signalling protocol that is also characterized by large message sizes and therefore, the use of SIP in the context of narrowband connections that are predominant in cellular networks can pose a congestion problem.

One interesting feature of SIP is its SUBSCRIBE/NOTIFY mechanism that allows a SIP based entity to receive information regarding another peer SIP entity with regard to certain events occurring at the peer, or with relation thereto. This generation of notifications via SIP NOTIFY messages for certain events is, of course, subject to prior authorization and approval at the peer entity.

For example, presence in IMS, which is based on the use of SIP, utilizes the above mechanism of subscribing and getting notifications for an event. In other words, a user or server can be informed of the presence or status of another party by subscribing to that party's presence information. If the subscription is accepted, then any time there is a change in the status of the second party's presence status, a notification is sent to the requestor notifying of that change (e.g. user B's presence status changes to "busy", user B's presence status has become "online", user B became not available, etc).

In general, the typical usage of the SUBSCRIBE/NOTIFY mechanism applies to events which are asynchronous in nature, i.e. that can happen at irregular intervals. In other words, one cannot predict how often they will occur. For example, if the user changes his presence status often, then every time that happens a notification is generated to other peers that subscribed to his presence status. It can be appreciated that in such instances the traffic generated by the multiple presence update notifications can be quite large. Furthermore, the current presence architecture in IMS utilizes SUBSCRIBE/NOTFY mechanism for other purposes too, such as for users list creation and users list management that are shared among multiple users. Presence lists are similar to email distribution lists, where users can issue a single subscription to the users list hosted in a list server, the later generating back-end subscription for all members of the users list. This saves the user the effort of issuing individual subscriptions to each user of the list, while allowing the similar benefits of individual subscriptions. An additional benefit is the saving of SIP signalling in cellular environments, where radio resources are scares. Thus, a user may subscribe to a presence lists that comprises multiple other users so as to be notified of the presence changes of any member of the list, whenever such change occurs for any member of the list.

Hence, there are numerous nodes in IMS networks that can generate traffic in an unpredictable way. That traffic is destined in general to User Equipments (UEs, alternatively herein designated as user terminals), among which many share their unique traffic channel with other time sensitive application, such as for example voice communications, video conferencing, or PTT. As such, receipt of multiple notification messages, such as presence notifications, by a UE during a time sensitive application such as a voice communication, can lead to the degradation of the quality of the live voice communication, or to the momentary interruption of that communication.

There has been a multitude of solutions that have attempted to address the problem of the degradation of the quality of live communication sessions when unpredicted traffic arrives at a UE. However, all solution aimed at reducing the traffic by controlling its rate and minimizing the length of the presence messages. Techniques were developed for limiting the size of the presence messages, including reducing the number of presence states and/or using compression algorithms in order to compress the traffic and reduce its size. However, none of the aforementioned solutions were able to provide a viable solution where presence related traffic did not negatively impact voice communications for UEs.

Although there is no prior art solution as the one proposed hereinafter for solving the above-mentioned deficiencies, the International publication WO 2005/034477 to Hutchison bears some relation with the field of the present invention. In the mentioned international publication, there is disclosed a functionality that predicts when time critical communications are likely to occur. On the basis of such predictions, other communications are sent at times when they will not interfere with the time critical communications. The method that involves scheduling transmissions in different classes, including Instant Messaging (IM), determines time periods during which communications in the 1^{st} class, including SIP INVITE messages and registration communications, or responses, are likely to occur. The transmissions of communications in the 2^{nd} class are scheduled such that they do not occur during determined time periods predicted for communications of the first class. However, the mentioned publication is limited to a method that predicts, in anticipation, when communications occur, and stops short of teaching or suggesting the concepts of the presently claimed invention.

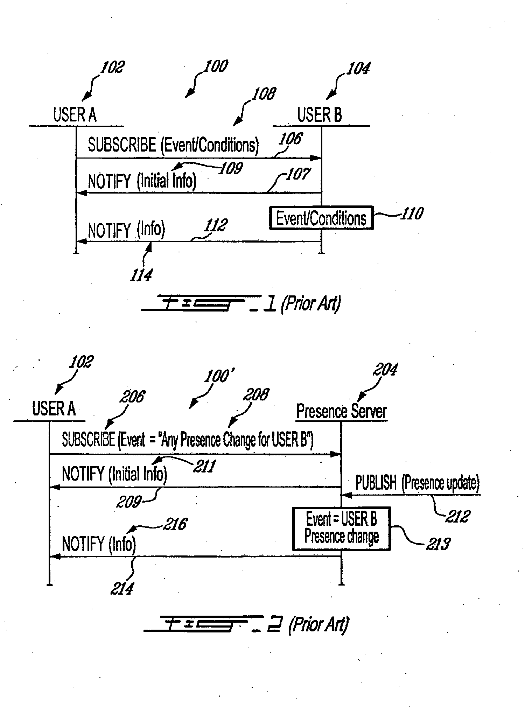

Reference is now made to Figure 1 (Prior Art) which is a simplified high level nodal operational and signal flow diagram illustrative of a prior art scenario for using a SIP SUBSCRIBE/NOTIFY mechanism between 2 users in order to send presence event information. Shown in Figure 1, is a simplified IMS network 100 comprising a first user terminal (UE) A 102 and a second user terminal (UE) B 104. The actions described in Figure 1 show the manner in which by subscribing to presence event information associated with a given user, a requestor can be notified when changes in such presence status occur. In action 106, the requestor user terminal A 102 sends a SIP SUBSCRIBE message to user terminal B 104, in order to subscribe to presence event information related to user terminal B (note that SIP acknowledgement and confirmation messages, such as SIP ACK and 200 OK messages, are omitted for simplicity purposes). In action 107, the user terminal B, upon receipt of the message, notifies user A 102 of the presence event information 109 it currently has (user B presence information = "Busy") regarding user terminal B 104 via a SIP NOTIFY message. In further action 110, changes to the presence event information of user terminal B can occur (e.g. Event = change of user B "Busy" status to "Idle") and, as a consequence user terminal B 104 issues a second SIP NOTIFY message destined to user terminal A 102, in action 112, the message comprising new presence information 114 (e.g. the new presence information of user B = "Idle"), for the sake of notifying user A 102 of the change.

Reference is now made to Figure 2 (Prior Art) which shows another IMS network 100', comprising the same user terminal A 102 and a presence server 204. It is assumed in this case that users use the presence server 204 to publish their presence status information and that the presence server 204 provides presence related services to users of the network 100' alike user terminal A 102. Figure 2 shows how a user terminal A 102 can subscribe with the presence server 104 in order to receive presence information associated with other presence entities such as the user terminal B 104. In initial action 206, user terminal A 102 subscribes for receiving presence event information from the presence sever 204, by sending to the later a SIP SUBSCRIBE message containing event and/or conditions 208 (note that in Figure 2 some SIP acknowledgement and confirmation messages are again omitted for simplicity purposes). In the particular example shown in Fig. 2, the event 208 specifies that user A 102 is interested in receiving notifications upon any presence change for user terminal B (not shown in Figure 2). Responsive to the SUBSCRIBE message 206, the server 204 responds back with a SIP NOTIFY message 209 comprising the initial presence information 211 that the presence server 204 currently contains regarding the user terminal B (e.g. User B presence information = "Busy"). At a later point in time, the presence serer 204 receives a SIP PUBLISH message 212 with a presence information update that comprises a change in the presence status for user terminal B. Thus, in action 213 the presence server 204 realizes that the change in the presence information for user B matches the event 208 specified for updating user terminal A 102 with such information. As a consequence, in action 214, the presence server 204 issues a new SIP NOTIFY message comprising the user terminal B's updated presence information 216 (e.g. User B presence information = "Idle".

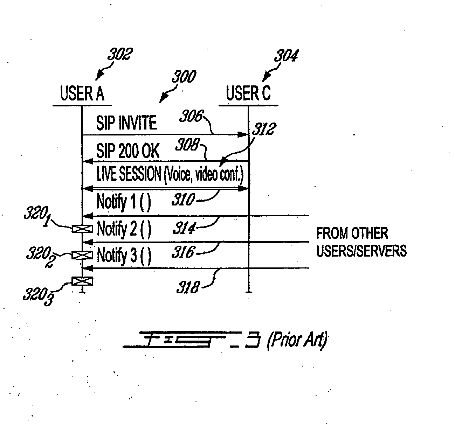

Reference is now made to Figure 3 (Prior Art), which is a high level nodal operation and signal flow diagram of a simplified IMS network 300 comprising a user terminal A 302 and user terminal C 304, where a drawback of the prior art method for sending presence event information is illustrated. In action 306, the user terminal A 302 issues a SIP INVITE message destined to user terminal C 304 in order to invite the later in a live voice session (note that some SIP acknowledgement and confirmation messages may be omitted for simplicity purposes). In action 308, the user C 304 responds with a SIP 200 OK message confirming the acceptance to join the live voice session, and in action 310 a live voice session is established between the two user terminals, which can then employ the live session in order to exchange live voice communication. However, a problem may occur, as mentioned earlier, during the live communication when notifications for presence information are received by one of the users. This is further exacerbated in situations where the live session and the presence traffic make use of the same traffic channel, which is assumed to be the case in the present exemplary scenario. For example, user terminal A 302 receives in actions 314, 316, and 318 individual SIP NOTIFY messages comprising presence information related to presence entities to whose presence information the user A 302 has subscribed (previous individual subscriptions not shown in Figure 3). As a consequence of receiving such notifications, user terminal A 302 can experience disruptions 3201 with the live session 310. Such disruptions can cause significant degradation in the voice signal being received or being transmitted over the live session 310.

Accordingly, it should be readily appreciated that in order to overcome the deficiencies and shortcomings of the existing solutions, it would be advantageous to have asolution for efficiently solving the aforementioned deficiencies. The present invention provides such a method and system.

WO 2006/114135 A1 relates to message handling in an IP multimedia subsystem (IMS). In detail, a method and apparatus are described for deferring the delivery of a SIP message to ensure provision of an appropriate service level to a user. A presence service allows subscribers to publish details of their current availability, location and contact addresses to other subscribers. When a user is involved in an ongoing SIP session which requires a relatively high quality of service, the sending of a push message from the network to the subscriber could disrupt the ongoing session and thus the delivery of the push message can be deferred until the session has finished. In particular, a receiving notification server checks whether any sending restrictions are currently in place for the user.

US 2004/0224694 A1 relates to a system and method of wireless device activity messaging. A method and system of reachability indication between a wireless device and a push server is described. Push messages are started or stopped depending on the status of a wireless data device. Status and capability information of a wireless data device are stored in a storage subsystem of a base station controller (BSC). Specifically, a device capability indicator field is included to indicate whether the device associated with a device and identifier field can support concurrent voice and data calls. The processor of the BSC examines the subsystem to detect whether a voice call and data call can be supported simultaneously at the wireless data device.

### Summary

At least some of the above-mentioned problems are solved by the independent claims.

In one aspect, a method for communications is described starting when a user terminal or server subscribes to receive a certain type of notification messages. When the user terminal or server later engages in a time sensitive application, such as in a voice communication, the user terminal or server, responsive to the engagement in the time sensitive application, requests a suspension of the subscription to the receipt of the certain type of notification messages. Such request may be achieved using, for example, SIP SUBSCRIBE, SIP NOTIFY or SIP PUBLISH messages.

In another aspect, a communications node is described comprising a communications module subscribing to receipt of a certain type of notification messages and initiating a time sensitive application, and a service logic module that responsive to the engagement in the time sensitive application, instructs issuance of a request to suspend the subscription to the receipt of the certain type of notification messages.

### Brief Description of the Drawings

For a more detailed understanding of the invention, for further objects and advantages thereof, reference can now be made to the following description, taken in conjunction with the accompanying drawings, in which:
Figure 1 (Prior Art) is a nodal operation and signal flow diagram illustrative of a prior art implementation of a presence service;
Figure 2 (Prior Art) is another nodal operation and signal flow diagram illustrative of a prior art implementation of a presence service;
Figure 3 (Prior Art) is yet another nodal operation and signal flow diagram illustrative of a prior art implementation of a presence service;
Figure 4 is a high level nodal operation and signal flow diagram illustrative of a first possible variant of the preferred embodiment of the present invention;
Figure 5 is another high level nodal operation and signal flow diagram illustrative of a second possible variant of the preferred embodiment of the present invention;
Figure 6 is yet another high level nodal operation and signal flow diagram illustrative of a third variant of the preferred embodiment of the present invention and
Figure 7 is a high level block diagram illustrative of an exemplary implementation of the preferred embodiment of the invention in a telecommunications node.

### Detailed Description

The innovative teachings of the present invention will be described with particular reference to various exemplary embodiments. However, it should be understood that this class of embodiments provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the drawings, like or similar elements are designated with identical reference numerals throughout the several views.

According to the present invention and its related preferred embodiments, there is provided a method, a system and a telecommunications node allowing the suspension of data traffic, such as for example of presence notifications, which may interfere with a user terminal's time sensitive application (e.g. a voice/video communication), for the duration the user terminal is engaged in such time sensitive application. According to the invention, various mechanisms may be used, such as a SIP SUBSCRBE/NOTIFY message scheme or a SIP PUBLISH message in order to request one or more nodes (e.g. user terminals or application servers) to suspend transmission of messages when the subscriber is engaged in time sensitive application in order to preserve the quality of the later.

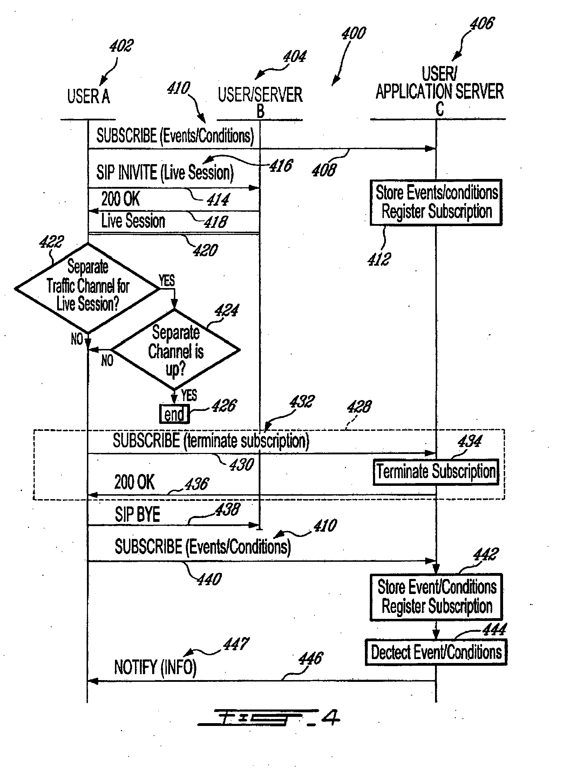

Reference is now made to Figure 4, which shows an exemplary nodal operation and signal flow diagram of a simplified exemplary network 400 implementing a preferred embodiment of the invention. The network 400 comprises a user terminal A 402, a user terminal B or a server (designated herein as the node 404), as well as another user terminal or application server C (designated herein as the node 406). User terminals and servers 402, 404, and 406 can carry on communications in the network 400, by using, for example, SIP signalling. At the beginning, in action 408, user terminal A 402 may subscribe to receive presence event information from node 406, by issuing a SIP SUBSCRIBE message containing presence events/conditions 410 that specify what type of presence event information the user terminal A 402 is interested to receive from node 406. For example, the presence events/conditions 410 may specify that the user terminal A 402 is interested to receive from presence server 406 the presence event information related to a user X (not shown) each time such presence event information is updated, e.g. going from a first state to a second state. In action 412, the node 406 receives the message 408 and stores the presence event/conditions 410 by registering the subscription of the user terminal A 402. At a later point in time, for the purpose of exemplifying the presently described preferred embodiment of the invention, it is assumed that user terminal A 402 desires to engage in a live communication session with node B 404, and for that purpose, issues a SIP INVITE message 414 that carries a request for a live communication session 416. In action 418, the user terminal B 404 notifies back the user terminal A 402 of its acceptance to engage in the requested live communication session, by returning a SIP 200 OK message to user terminal A 402. Finally, both parties 402 and 404 establish a live communication session 420 therebetween. According to the preferred embodiment of the present invention, in action 422, the user terminal A 402 determines if it has a separate traffic channel designated for exclusively support the live communication session. If so, i.e. when the live communication session 420 has the exclusive use of a separate traffic channel, in further action 424 the user terminal A 402 detects if the separate traffic channel is idle, i.e. it is functional. When the traffic channel exists and is functional, it is concluded that the quality of the live communication session cannot be negatively affected by receipt of presence-related notification messages (or of other notification messages such as for example Instant Messaging, etc) from node 406 and the method terminates at step 426 as no further action is needed to protect the quality of the live communication session. Otherwise, if in action 424 it is rather determined that the traffic channel designated for the exclusive use of the live communication session is down or otherwise inaccessible, or if in action 422 it is determined that user terminal A 402 uses the same traffic channel for carrying out both the live communication session 420 and for receiving e.g. presence notification messages, in action 428, the user terminal A 402 acts to suspend receipt of presence messages from the node 406 in order to prevent disruption of the live communication session 420. For that purpose, the user terminal A 402 may use a SIP SUBSCRIBE message 430 that is sent to the node 406, the message comprising an indication 432 to terminate the subscription registered in previous action 412. In action 434, node C 406 terminates the subscription of user terminal A 402 and confirms the termination with a SIP 200 OK message 436. As a consequence of action 428, the user terminal A 402 no longer receives notification messages from the node C 406 during the live communication session 420. At a later point in time, in action 438, the user terminal A 402 terminates the live communication session by issuing a SIP BYE message for the node B 404, so that the live communication session ends. Subsequent to termination of the live session, the user A 402 issues a new SIP SUBSCRIBE message 440 in order to reestablish the subscription for presence event notifications with the node C 406, by including in the message 440 the presence event/conditions 410. In action 442, the node 406 stores the events/conditions 410 and again registers the user terminal A 402 subscription for presence notification messages. In action 444, node C 406 detects the occurrence of the specified events/conditions 410 (e.g. as a consequence of an update of the presence event information relative to user X, not shown) that trigger a presence notification 446, in the form of a SIP NOTIFY message carrying presence event information 447, to be sent back to the user terminal A 402 with the presence information requested (the update of user X presence event information).

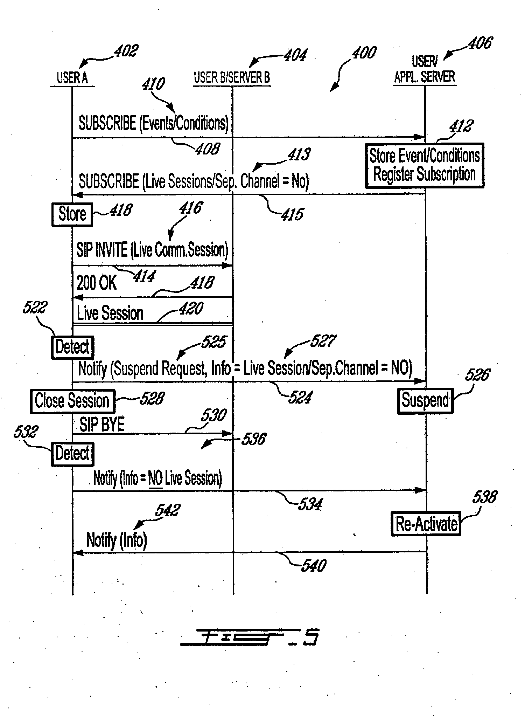

Reference is now made to Figure 5, which shows another high level nodal operation and signal flow diagram of the same exemplary network 400 as described hereinbefore, the network comprising the same nodes 402, 404, and 406. Shown in Figure 5 are similar actions 408 and 412 as described hereinbefore by which the user terminal A 402 subscribes for receiving presence event information related to user X (not shown) from the node 406 upon occurrence of events/conditions 410. Figure 5 shows another variant of the preferred embodiment of the invention that includes another way of notifying the node 406 when the user terminal A 402 engages in a live communication session, so as to permit suspension of the transmission of presence notifications. Such a variant starts in action 415, where the node 406 also uses the SIP SUBSCRIBE/NOTIFY mechanism in order to request notification form the user A 402 when the later engages in a time sensitive application such as a live communication session. The node 406 sends to the user terminal A 402 a SUBSCRIBE message 415 that contains the definition of an event 413 that would trigger back notifications to the node 406 when a live communication session is established by the user A terminal 402, and optionally, when such a live session is not designated or allocated the use of a separate traffic channel. In action 418, the user terminal 402 stores the event 413. At a later point in time, the user terminal A 402 establishes a live communication session 420, by issuing a SIP INVITE message 414 to the user terminal B 404 containing a request 416 for the establishment of the live communication session, whose acceptance is confirmed by a SIP 200 OK message 418 sent from the node 404, and the live communication session 420 is established.

In action 522, the user terminal A 402 having stored the event 413, detects that it should notify the node 406 of the establishment of the live session 420. The detection 522 may comprise steps similar to the ones previously described at steps 422 and 424 of Figure 4. Thus, in action 522, the user terminal A 402 concludes that a live communication session is established without being allocated the use of a separate traffic channel, and therefore, in action 524 issues a SIP NOTIFY message for the node 406, in order to request the suspension of the transmission of presence event information. For this purpose, the NOTIFY message 524 includes a suspension request 525 and optionally information 527 regarding the establishment of a live session with no allocated separate traffic channel. The message 524 is received by the node 406 and in action 526, the node 406 suspends the transmission of presence related information to the user terminal A 402, so that the live communication session is not be disrupted by interferences with any messages received by the user terminal A 402. At a later point in time, the user terminal A 402 decides to terminate the live communication session in action 528, and for that purpose issues a SIP BYE message 530 to the node 404 and further notifies the node 406 in action 534 that no live session exists any longer. As a consequence of the notification 534, the node 406 reactivates in action 538 the subscription initially made in action 412 and if any relevant presence event information in relation with user X is received in the meantime, notifies in action 540 the user terminal A 402 with the presence information 542.

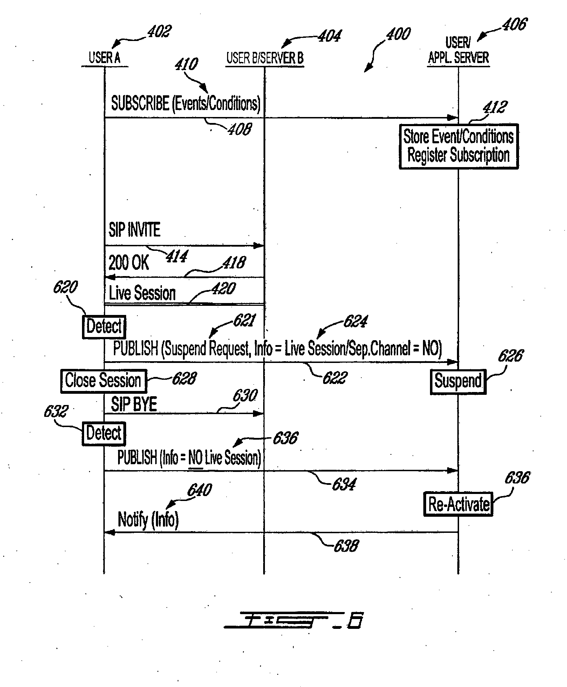

Reference is now made to Figure 6, which is yet another nodal operation and signal flow diagram illustrative of yet another variant of the preferred embodiment of the invention for notifying a node when a user terminal engages in a time sensitive application such as a live communication session, so that receipt of presence messages is suspended for the duration of the session. Shown in Figure 6, is the same network 400 with nodes 402, 404, and 406, wherein the user terminal A 402 again subscribes in action 408 to receive presence event information from node 406, the later storing in action 412 the definition of events/conditions 410 upon which occurrence presence event information is to be transmitted to user terminal A 402. In action 414 and 418, user terminal A 402 again establishes a live communication session 420 with node B 404. In action 620, the user terminal A 402 detects the need to notify the node 406 in order to request suspension of the transmission of presence message in order to prevent disruption of the live communication session 420. The detection 620 may comprise steps similar to the ones previously described at 422 and 424 of Figure 4. According to the present variant of the preferred embodiment of the invention, in action 622 the user terminal A 402 issues a SIP PUBLISH message 622 requesting the suspension of the transmission of presence event information, which includes a suspension request 621 and optionally information 624 informing of the establishment of the live communication session without allocation of a separate traffic channel 624. The SIP PUBISH message 622 is received at node 406 and in action 626, the later suspends the transmission of presence related information to the user terminal A 406. At a later point in time, in action 628, the use terminal A 402 closes the live communication session by issuing a SIP BYE message 630 and in action 632, detects the need of notifying back the node 406 of the termination of the session so that presence messages transmission can resume if necessary. For that purpose, in action 634, the user terminal A 402 issues a new SIP PUBLISH message for the node 406 containing information 636 that no live session exists, and upon receipt of the PUBLISH message 634, the node 406 reactivates presence messages transmission to user terminal A 402. In case any relevant presence event information that is of interest to the user terminal A 402 was received in the meantime by the node 406, in action 638, the later issues a new SIP NOTIFY message containing presence information 640 of interest to the user terminal A 402 (any presence information update regarding user X).

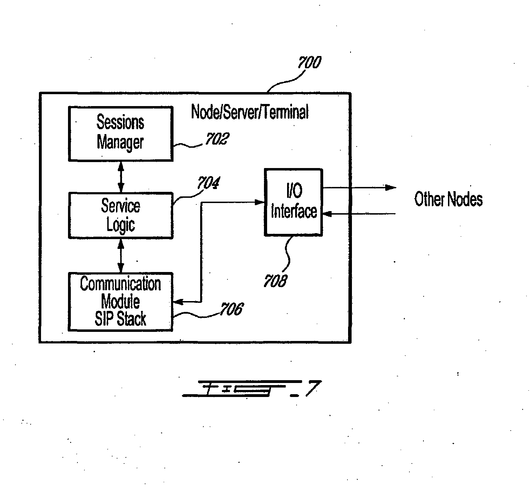

Reference is now made to Figure 7, which shows an exemplary high level functional block diagram of a telecommunications node 700 according to the preferred embodiment of the present invention. The node 700 may be a server or a user terminal as described hereinbefore, that implements a session manager module 702 connected to a service logic module 704 and to a communications module 706 that may have the form of a SIP stack module. An I/O interface 708 is used for communications with other nodes and is responsible of receiving SIP messages from, and for transmitting the same to other external nodes. The communications module 706 is responsible for creation and interpretation of messages respectively issued and received by the node 700. The session manager 702 is used in order to detect and manage the establishment of separate or shared traffic channels associated with communication sessions handled by the node 700. The service logic 704 is used in order to implement the present invention, including detecting when a time sensitive application is initiated at the node 700, and to instruct the communications module 706 to issue messages for suspending the receipt of notification messages from other nodes. For example, with reference being now made jointly to Figures 4, 5, 6 and 7, the SIP stack is responsible for exchanging messages 414 and 418 in order to establish the SIP session 420. Actions 422 and 424 are accomplished by the service logic 704 that detects if a separate traffic channel is assigned to the live communication session and if that channel is Idle, from information obtained from the session manager 702. If the answer is negative to any one of the actions 422 or 424, the service logic 704 instructs the SIP stack to issue the proper SIP message, e.g. the SIP SUBSCRIBE message 430, in order to notify the node 406 of the desire to suspend presence related messages receipt when there is an ongoing live communication. Similarly, with joint reference being now made to Figures 5 and 7, once the live communication session 420 is established by the exchange of messages 416 and 418 handled by the communications module 706, in action 522 the service logic 704 detects the need to notify the node 406 that presence related messages should be suspended. Once the communications module 706 closes the live communications session in action 528, the service logic 704 is notified of the closure of the session and detects in action 532 the need to issue a SIP NOTIFY message to be sent back to the application server 406, which is accomplished by the communications module 706. Finally, with joint reference being now made to both Figures 6 and 7, detections 620 and 632 are accomplished by the service logic 704 and SIP messages 614 and 634 are issued by the communications module 706 to the other node 406.

Therefore, it is apparent that with the present invention, it is possible for telecommunications nodes such as for example user terminals or servers to engage in time sensitive applications such as live communication sessions (e.g. in voice or video conferencing communications) and to suspend receipt of messages (e.g. presence related messages) that may interfere with the live communications sessions. Although the exemplary embodiments of the present invention have been mainly described with reference to presence related messages, it is to be understood by those skilled in the art that the application of the present invention is not limited to suspension of solely presence related messages, but can rather be advantageously used for suspending other types of messages meant to be received by a party during a time sensitive application such as a live voice session. For example, a user terminal might have subscribed to other types of notifications, such as for example weather notifications to be sent as SMS (Short Message Service), MMS (Multimedia Messaging Service), or IMS (IP Multimedia Subsystem) messages, and the invention may allow the user to notify an SMS server, an MMS server, or an IMS server when it engages in a time sensitive applications as described in Figures 4, 5 and 6. The present invention provides a simple and efficient manner of using SIP messages, e.g. SIP PUBLISH messages or SIP SUBSCRIBE/NOTIFY mechanism in order to notify another user or application server to suspend transmission of messages when a live communication is established. However, it is understood that other communication protocols may also be used for carrying out these notifications. A further embodiment of the invention allows for further calculations to be made so that such notifications to cooperating nodes are only sent when the live communication session is not assigned a separate traffic channel or when such channel is not idle (e.g. is malfunctioning or is otherwise unavailable).

Based upon the foregoing, it should now be apparent to those of ordinary skills in the art that the present invention provides an advantageous solution, which offers a simple yet efficient manner of preserving the quality of time sensitive applications such as for example of voice communications and video conferencing. Although the system and method of the present invention have been described with particular reference to certain type of messages and nodes, it should be realized upon reference hereto that the innovative teachings contained herein are not necessarily limited thereto and may be implemented advantageously with any type of messages to which a party may have subscribed and with any type of signaling protocol. It is believed that the operation and construction of the present invention will be apparent from the foregoing description. While the method and system shown and described have been characterized as being preferred, it will be readily apparent that various changes and modifications could be made therein without departing from the scope of the invention as defined by the claims set forth hereinbelow.

Although several preferred embodiments of the method and system of the present invention have been illustrated in the accompanying Drawings and described in the foregoing Detailed Description, it will be understood that the invention is not limited to the embodiments disclosed, but is capable of numerous rearrangements, modifications and substitutions without departing from the invention as set forth and defined by the following claims.

## Claims

1. A method for communications, the method comprising the steps of:
a. subscribing (410) to receipt of a certain type of notification messages at a subscribing communication node (402);
b. engaging (420) in a time sensitive communication; and
c. responsive to the engagement in the time sensitive communication, determining (422) whether the time sensitive communication is assigned to a separate traffic channel, and if not, requesting (430) by the communication node (402) a suspension of the subscription to the receipt of the certain type of notification messages for the duration the communication node (402) is engaged with the time sensitive communication.

2. The method claimed in claim 1, further comprising the steps of;
d. carrying out the time sensitive communication;
e. terminating the time sensitive communication; and
f. responsive to the termination of the time sensitive communication,
requesting a reactivation of the subscription.

3. The method claimed in claim 1, wherein step c. comprises a transmission of a SIP, Session Initiation Protocol, SUBSCRIBE message (432) requesting the suspension of the subscription.

4. The method claimed in claim 1, wherein step c. comprises a transmission of a SIP, Session Initiation Protocol, NOTIFY message (525) requesting the suspension of the subscription.

5. The method claimed in claim 1, wherein step c. comprises a transmission of a SIP, Session Initiation Protocol, PUBLISH message (621) requesting the suspension of the subscription.

6. The method claimed in claim 1, wherein:
the certain type of notification messages comprise presence related messages; and
the time sensitive communication comprises a live voice communication.

7. The method as claimed in claim 1, wherein step c. further comprises step c.1, subsequent to step c, of determining whether the separate traffic channel is active, and if not, requesting a suspension of the subscription to the receipt of the certain type of notification messages.

8. The method as claimed in claim 1, wherein step a. comprising sending a SIP, Session Initiation Protocol, SUBSCRIBE message comprising events defining the certain type of notification message.

9. A communications node comprising:
a communications module (706) adapted to subscribe to receipt of a certain type of notification messages and initiating a time sensitive communication;
a session manager module (702) adapted to determine that the time sensitive communication is not assigned to a separate traffic channel;
and a service logic module (704), in response to the determination of the session manager, adapted to request a suspension of the subscription to the receipt of the certain type of notification messages for the duration the communication node (402) is engaged with the time sensitive communication.

10. The communications node claimed in claim 9, wherein the communications module (706) is adapted to terminate the time sensitive communication, and responsive to the termination of the time sensitive communication, to request a reactivation of the subscription.

11. The communications node claimed in claim 9, wherein the communications module (706) comprises a SIP (Session Initiation Protocol) stack module (706) adapted to transmit a SIP, Session Initiation Protocol, SUBSCRIBE message requesting the suspension of the subscription.

12. The communications node claimed in claim 9, wherein the communications module (706) is adapted to transmit a SIP, Session Initiation Protocol, NOTIFY message requesting the suspension of the subscription.

13. The communications node claimed in claim 9, wherein the communications module (706) is adapted to transmit a SIP, Session Initiation Protocol, PUBLISH massage requesting the suspension of the subscription.

14. The communications node claimed in claim 9, wherein
the certain type of notification messages comprise presence related messages; and the time sensitive communication comprises a live voice communication.

15. The communications node as claimed in claim 9, wherein the session manager module (702) is adapted to further determine that the separate traffic channel is not active and to trigger the service logic module (704) to request a suspension of the subscription of the receipt of the certain type of notification messages.

16. The communications node as claimed in claim 9, wherein the communications module (706) is adapted to send a SIP, Session Initiation Protocol, SUBSCRIBE message comprising events defining the certain type of notification messages.

## Patentansprüche

1. Kommunikationsverfahren, wobei das Verfahren folgende Schritte umfasst:
a. Teilnehmen (410) am Empfang einer bestimmten Art von Benachrichtigungen an einem teilnehmenden Kommunikationsknoten (402);
b. Starten (420) einer zeitsensiblen Kommunikation; und
c. als Reaktion auf das Starten der zeitsensiblen Kommunikation, Bestimmen (422), ob die zeitsensible Kommunikation einem separaten Verkehrskanal zugewiesen ist, und wenn nicht, Anfordern (430) einer Aussetzung der Teilnahme am Empfang der bestimmten Art von Benachrichtigungen für die Dauer, die der Kommunikationsknoten (402) mit der zeitsensiblen Kommunikation beschäftigt ist, durch den Kommunikationsknoten (402).

2. Verfahren nach Anspruch 1, welches ferner folgende Schritte umfasst:
d. Ausführen der zeitsensiblen Kommunikation;
e. Beenden der zeitsensiblen Kommunikation; und
f. als Reaktion auf das Beenden der zeitsensiblen Kommunikation,
Anfordern einer Reaktivierung der Teilnahme.

3. Verfahren nach Anspruch 1, wobei Schritt c. eine Übertragung einer SIP (Session Initiation Protocol) - TEILNEHMEN-Meldung (432), welche die Aussetzung der Teilnahme anfordert, umfasst.

4. Verfahren nach Anspruch 1, wobei Schritt c. eine Übertragung einer SIP (Session Initiation Protocol) - BENACHRICHTIGEN-Meldung (525), welche die Aussetzung der Teilnahme anfordert, umfasst.

5. Verfahren nach Anspruch 1, wobei Schritt c. eine Übertragung einer SIP (Session Initiation Protocol) - VERÖFFENTLICHEN-Meldung (621), welche die Aussetzung der Teilnahme anfordert, umfasst.

6. Verfahren nach Anspruch 1, wobei:
die bestimmte Art von Benachrichtigungen Präsenz-bezogene Meldungen umfasst; und
die zeitsensible Kommunikation eine Live-Sprachkommunikation umfasst.

7. Verfahren nach Anspruch 1, wobei Schritt c. ferner Schritt c.1, im Anschluss an Schritt c, zum Bestimmen, ob der separate Verkehrskanal aktiv ist, und wenn nicht, Anfordern einer Aussetzung der Teilnahme am Empfang der bestimmten Art von Benachrichtigungen, umfasst.

8. Verfahren nach Anspruch 1, wobei Schritt a. das Senden einer SIP (Session Initiation Protocol) -TEILNEHMEN-Meldung umfasst, die Ereignisse umfasst, welche die bestimmte Art der Benachrichtigung definieren.

9. Kommunikationsknoten, welcher Folgendes umfasst:
ein Kommunikationsmodul (706), das zur Teilnahme am Empfang einer bestimmten Art von Benachrichtigungen und Einleiten einer zeitsensiblen Kommunikation geeignet ist;
ein Sitzungsmanagermodul (702), das zum Bestimmen, dass die zeitsensible Kommunikation nicht einem separaten Verkehrskanal zugewiesen ist, geeignet ist; und
ein Servicelogikmodul (704), das als Reaktion auf die Bestimmung des Sitzungsmanagers zum Anfordern einer Aussetzung der Teilnahme am Empfang der bestimmten Art von Benachrichtigungen für die Dauer, die der Kommunikationsknoten (402) mit der zeitsensiblen Kommunikation beschäftigt ist, geeignet ist.

10. Kommunikationsknoten nach Anspruch 9, wobei das Kommunikationsmodul (706) zum Beenden der zeitsensiblen Kommunikation, und als Reaktion auf die Bestimmung der zeitsensiblen Kommunikation, zum Anfordern einer Reaktivierung der Teilnahme geeignet ist.

11. Kommunikationsknoten nach Anspruch 9, wobei das Kommunikationsmodul (706) ein SIP (Session Initiation Protocol) -Stack-Modul (706) umfasst, das zum Übertragen einer SIP (Session Initiation Protocol) - TEILNEHMEN-Meldung, welche die Aussetzung der Teilnahme anfordert, geeignet ist.

12. Kommunikationsknoten nach Anspruch 9, wobei das Kommunikationsmodul (706) zum Übertragen einer SIP (Session Initiation Protocol) -BENACHRICHTIGEN-Meldung, welche die Aussetzung der Teilnahme anfordert, geeignet ist.

13. Kommunikationsknoten nach Anspruch 9, wobei das Kommunikationsmodul (706) zum Übertragen einer SIP (Session Initiation Protocol) -VERÖFFENTLICHEN-Meldung, welche die Aussetzung der Teilnahme anfordert, geeignet ist.

14. Kommunikationsknoten nach Anspruch 9, wobei die bestimmte Art von Benachrichtigungen Präsenz-bezogene Meldungen umfasst und die zeitsensible Kommunikation eine Live-Sprachkommunikation umfasst.

15. Kommunikationsknoten nach Anspruch 9, wobei das Sitzungsmanagermodul (702) zum weiteren Bestimmen, dass der separate Verkehrskanal nicht aktiv ist, und zum Ansprechen des Servicelogikmoduls (704) zum Anfordern einer Aussetzung der Teilnahme am Empfang der bestimmten Art von Benachrichtigungen geeignet ist.

16. Kommunikationsknoten nach Anspruch 9, wobei das Kommunikationsmodul (706) zum Senden einer SIP (Session Initiation Protocol) -TEILNEHMEN-Meldung, die Ereignisse umfasst, welche die bestimmte Art von Benachrichtigungen definieren, geeignet ist.

## Revendications

1. Procédé pour des communications, le procédé comprenant les étapes consistant à :
a. s'abonner (410) à la réception d'un certain type de messages de notification au niveau d'un noeud de communication d'abonnement (402) ;
b. s'engager (420) dans une communication sensible au temps ; et
c. en réponse à l'engagement dans la communication sensible au temps, déterminer (422) si la communication sensible au temps est affectée à un canal de trafic distinct, et si non, demander (430) par le noeud de communication (402) une suspension de l'abonnement à la réception du certain type de messages de notification pour la durée pendant laquelle le noeud de communication (402) est engagé dans la communication sensible au temps.

2. Procédé selon la revendication 1, comprenant en outre les étapes consistant à :
d. effectuer la communication sensible au temps ;
e. mettre fin à la communication sensible au temps ; et
f. en réponse à la fin de la communication sensible au temps, demander une réactivation de l'abonnement.

3. Procédé selon la revendication 1, dans lequel l'étape c. comprend la transmission d'un message SIP, pour Session Initiation Protocol, SUBSCRIBE (432) demandant la suspension de l'abonnement.

4. Procédé selon la revendication 1, dans lequel l'étape c. comprend la transmission d'un message SIP, pour Session Initiation Protocol, NOTIFY (525) demandant la suspension de l'abonnement.

5. Procédé selon la revendication 1, dans lequel l'étape c. comprend la transmission d'un message SIP, pour Session Initiation Protocol, PUBLISH (621) demandant la suspension de l'abonnement.

6. Procédé selon la revendication 1, dans lequel :
le certain type de messages de notification comprend des messages liés à la présence ; et
la communication sensible au temps comprend une communication vocale en direct.

7. Procédé selon la revendication 1, dans lequel l'étape c. comprend en outre l'étape c.1, subséquente à l'étape c., consistant à déterminer si le canal de trafic distinct est actif, et si non, demander une suspension de l'abonnement à la réception du certain type de messages de notification.

8. Procédé selon la revendication 1, dans lequel l'étape a. comprend de transmettre un message SIP, pour Session Initiation Protocol, SUBSCRIBE comprenant des événements définissant le certain type de messages de notification.

9. Noeud de communications comprenant :
un module de communications (706) adapté pour s'abonner à la réception d'un certain type de messages de notification et pour initier une communication sensible au temps ;
un module gestionnaire de session (702) adapté pour déterminer que la communication sensible au temps n'est pas affectée à un canal de trafic distinct ;
et un module de logique de service (704) adapté pour demander une suspension de l'abonnement à la réception du certain type de messages de notification pour la durée pendant laquelle le noeud de communication (402) est engagé dans la communication sensible au temps, en réponse à la détermination du gestionnaire de session.

10. Noeud de communications selon la revendication 9, dans lequel le module de communications (706) est adapté pour mettre fin à la communication sensible au temps, et en réponse à la fin de la communication sensible au temps, pour demander une réactivation de l'abonnement.

11. Noeud de communications selon la revendication 9, dans lequel le module de communications (706) comprend un module de pile SIP (Session Initiation Protocol) (706) adapté pour transmettre un message SIP, pour Session Initiation Protocol, SUBSCRIBE demandant la suspension de l'abonnement.

12. Noeud de communications selon la revendication 9, dans lequel le module de communications (706) est adapté pour transmettre un message SIP, pour Session Initiation Protocol, NOTIFY demandant la suspension de l'abonnement.

13. Noeud de communications selon la revendication 9, dans lequel le module de communications (706) est adapté pour transmettre un message SIP, pour Session Initiation Protocol, PUBLISH demandant la suspension de l'abonnement.

14. Noeud de communications selon la revendication 9, dans lequel :
le certain type de messages de notification comprend des messages liés à la présence ; et la communication sensible au temps comprend une communication vocale en direct.

15. Noeud de communications selon la revendication 9, dans lequel le module gestionnaire de session (702) est adapté pour déterminer en outre que le canal de trafic distinct n'est pas actif et pour déclencher le module de logique de service (704) pour demander une suspension de l'abonnement à la réception du certain type de messages de notification.

16. Noeud de communications selon la revendication 9, dans lequel le module de communications (706) est adapté pour envoyer un message SIP, pour Session Initiation Protocol, SUBSCRIBE comprenant des événements définissant le certain type de messages de notification.
